# EUROPEAN PATENT SPECIFICATION

(11) **EP 2 569 564 B1**
(45) Date of publication and mention of the grant of the patent: **18.03.2015**
(21) Application number: 11719811.9
(22) Date of filing: 11.05.2011
(51) Int. Cl.: F16L 1/12, F16L 5/00, F16L 57/02, H02G 1/10, H02G 3/22

(54) **CABLE PULL-IN SYSTEM AND METHOD FOR OFFSHORE STRUCTURES**
KABELEINZUGSSYSTEM UND VERFAHREN FÜR OFFSHORE-KONSTRUKTIONEN
SYSTÈME ET MÉTHODE DE TIRAGE DE CÂBLE POUR STRUCTURES OFFSHORE

(30) Priority: 17.02.2011 US 443741 P; 11.05.2010 US 333270 P
(43) Date of publication of application: 20.03.2013
(73) Proprietor: Seaproof Solutions AS, 5224 Nesttun (NO)
(72) Inventor: BANG-ANDRESEN, Henrik, N-5098 Bergen (NO); HATLING, John, Fredrik, N-5222 Nesttun (NO); TOFTEN, Richard, J., N-5231 Paradis (NO); DYBEVIK, Thomas, N-5353 Straume (NO)
(74) Representative: Onsagers AS
(86) International application number: PCT/EP2011/057584
(87) International publication number: WO 2011/141494

(56) References cited:
- EP-A1- 1 985 845
- GB-A- 2 463 940
- JP-A- 7 301 480

## Description

### FIELD OF THE INVENTION

The present invention relates to undersea cables, in particular cables that are to be connected into offshore structures - e.g. monotowers as used in Offshore Wind turbines as foundation for Wind Turbines.

### BACKGROUND OF THE INVENTION

When undersea cables are to be connected into offshore structures - e.g. monotowers as used in offshore installations as foundation for Wind Turbines or into gravity platforms - there is a need to control and protect the cable from over-bending and jamming during pull-in and to protect the cable against dynamic forces during operation. It is also favorable to be able to seal off the inlet through which the cable enters the structure to prevent fresh seawater from entering the structure. The system must also enable fast installation, be safe to install and have a low risk of failure to shorten the installation time and thus the involvement of a costly cable laying vessel.

Prior art solutions have proven to be difficult to install, have a high failure rate which results in a costly installation and in some cases complete cable sections needs to be replaced. The prior art solutions not do also give a proper dynamic protection during operation and problematic scouring conditions. The sealing solutions used have proven not to be reliable.

Known prior art systems may be built up to form an array prior to pull-in, and the cable can be pulled into the structure with the array fitted onto the cable at a fixed position, which in turn limits flexibility during the pull-in operation.

Document EP 1985845 discloses a prior art cable pull-in system.

### SUMMARY OF THE INVENTION

The invention provides a cable pull-in system for offshore structures (1) of the type having a hollow interior extending from the sea bed to above the surface of the water and an entry hole (2) in the external wall of the structure. The system comprises an entry hole protection unit (3) comprising a frame (4) equipped with magnets (6) arranged to be attached to the external wall of the structure (1) at entry hole (2) such as by an ROV. The entry hole protection unit (3) further comprising an elongated, hollow bend stiffener section (5) arranged to protrude through entry hole (2) when frame (4) is attached to the external wall. The system yet further comprising an elongated bend stiffener assembly (7) within the interior of which is arranged an elongated cable member (10), said elongated bend stiffener assembly being equipped with radial sealing members adapted for engaging the interior of bend stiffener section (5). The elongated bend stiffener assembly is pulled through the protection unit and up to a hangoff point above the water surface. According to one aspect, floatation members are arranged to float to the surface carrying attached wires that can be used to pull the cable trough the protection unit.

### BRIEF DESCRIPTION OF THE DRAWINGS

Fig 1 is a perspective view of the system according to the invention.
Figs 2A-C illustrate the method of the invention
Fig 3 is a detailed perspective view of an entry hole protection unit according to one aspect of the invention

### DETAILED DESCRIPTION OF THE INVENTION

As seen in the figures, the invention comprises a system and method for the pull-in and dynamic protection of cables and the like for an offshore structure (1) such as a monopile used for offshore wind turbines. The offshore structure has an entry hole (2), typically near the bottom of the structure, through which a cable is pulled into the hollow interior of the structure, and up to the top of the structure.

According to one aspect, the present invention comprises an entry hole protection unit (3) comprising a frame (4) and a bend stiffener section (5) arranged to protrude into entry hole (2). Bend stiffener section (5) is advantageously equipped with a bell mouth (5A). Entry hole protection unit (3) may be pre-installed at the offshore structure entry hole (2) or may installed in the field, and according to one aspect may be held in place by means of magnetic force from magnets (6) arranged on frame (4). Because of the forces associated with driving a monopole into the seabed, anything attached to the monopole runs the risk of being dislodged. Therefore, according to one aspect of the invention, the entry hole protection unit (3) is connected to the offshore structure after it is installed in the seabed by means of an ROV. The ROV will position the bend stiffener section (5) into entry hole (2), and the magnets (6) will hold frame (4) securely to the metal sides of the structure. The bend stiffener section (5) protruding into the entry hole that will give a smooth bending curve and low friction during pull-in.

The invention further comprises an assembled water-tight, flexible bend stiffener assembly (7), running from the outside of the structure under water, through the entry hole protection unit (3) to a mounting or hang off point (8) above sea level inside the said structure (1). One of the bend stiffener sections comprises radial lip seals (9) arranged to engage the inside of bend stiffener section (5) to stop the flow of seawater between the inside of the offshore structure and the sea.

The invention is an open system intended to be used in conjunction with any elongated flexible member (10) (for example cables, hoses, umbilicals etc, hereafter called "cable" for the purpose of explanation), and permits external seawater to flow along the length of the cable inside the bend stiffener assembly (7). The bend stiffener assembly will in addition to providing static and dynamic protection also create a sealed barrier between the external seawater and internal atmosphere of the structure, but it does not isolate the cable (10) from the external seawater. The cable (10) will not be attached to the bend stiffener assembly (7) and thus it is able to move freely relative to the bend stiffener assembly. This eliminates unwanted cable tension which often is the case as the cable is typically buried into the seabed (13). Externally, the bend stiffener assembly (7) extends to desired length to control the flex of the cable at the structure's entry point.

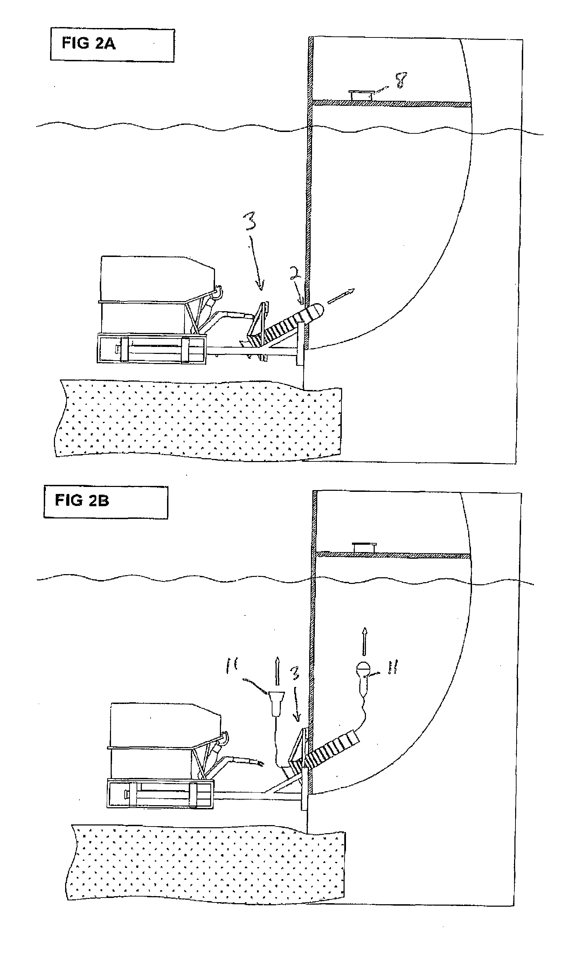

According to one aspect of the invention, two floatation members (11) are arranged inside bend stiffener section (5) as seen in Fig. 2B. The float members are connected to wires of sufficient length to allow the float members to rise to the surface. Once entry hole protection unit (3) is in place, the float members are released and allowed to rise to the surface, one on the inside of the structure and one on the outside of the structure. The outside wire is attached to the cable (10) / bend stiffener assembly (7), while the inside wire is used to pull cable (10) / bend stiffener assembly (7) through the entry hole and up to the hang off point.

### Preferred arrangement

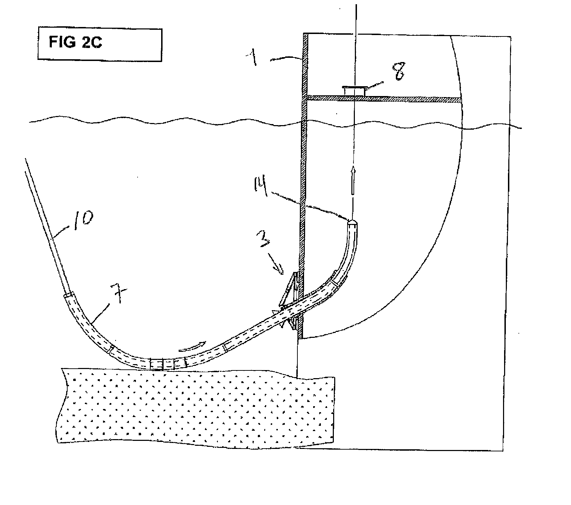

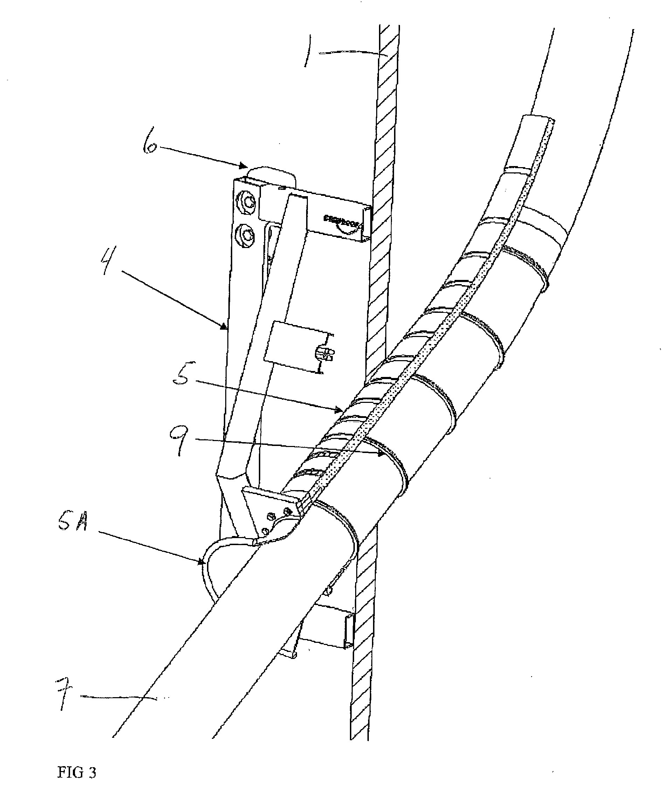

The magnets (6) are mounted to structural frame (4) that holds an open bend stiffener unit protruding the entry hole as shown in fig 3. The unit is pre-assembled and can preferably be installed by the means of an ROV. The purpose of the protection unit is to provide guidance, abrasion protection and bend relief during pull-in operations. The flexible protection unit will preferably have external lip seals providing water flow restriction between the offshore structure and the flexible unit. Dimensional deformations of the interface bore hole that may occur during installation of the monopile is not critical to the system as the entry hole protection unit is flexible and designed to allow for dimensional variances. The installation of the entry hole protection unit can preferably be conducted immediately after installation of the offshore structure to avoid marine growth at the entry hole. Inside the protection unit, as shown in Fig 2, is arranged a double ended pull-in line comprising two floating elements attached to each end of a length of wire. One floating element is arranged to float to the surface internally in the offshore structure and one is arranged to float to the surface to the exterior of the offshore structure, thus providing access at the surface to a pull-in line for the wire used during cable pull-in operations.

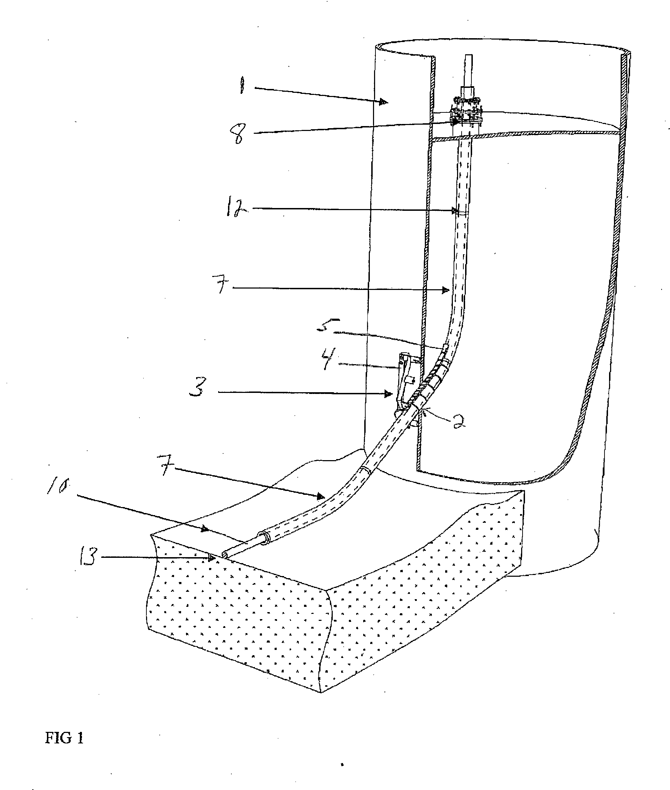

As shown in Fig 1, the bend stiffener assembly (7) can be manufactured in shorter sections and assembled by joints (12) to any length required, to accommodate structures of different heights and water levels. This feature will improve handling on deck of installation vessel, as well as the logistics to site.

The sections comprising flexible bend stiffener assembly (7) will preferably be made as thin walled, fiber reinforced polyurethane structures. This will provide a flexible yet strong structure that will withstand mechanical bending and tension forces, impacts, wear and abrasion during pull-in and operation. For power cables, a thin walled sleeve will lower potential heat transfer problems and allow cable suppliers to cost-optimize cable design. A non-metallic bend stiffener will also eliminate corrosion and magnetic field issues found in conventional steel structures. Joints (12) between the sections of the bend stiffener assembly (7) will be in-line and sealed from the environment inside the sub-sea structure.

Figures 2A-C illustrates the method of installing the cable and the cable protection system. As can be deduced by the figures, the entry hole protection unit is installed first by ROV and the guide wires system is released. The guide wire will be attached to the bend stiffener array through a pull nose (14) and then gradually deployed/ lowered from the cable laying vessel and simultaneously pulled through the entry hole protection unit (3) up to an internal platform above sea level where it is connected to the hang off (8). The bend stiffener section with the radial lip seals (9) is pulled into the entry protection unit and engages in a tight seal.

As seen in fig. 1, the invention provides protection for the cable at three levels, both during pull-in and operation. Inside the monopile (1) the invention will protect the cable (10) from excessive bending as it is pulled in, decrease any tensile loads other than the cable weight itself and dampen any vibrations caused by the windmill operation. The cable is further protected in the entry hole from excessive bending and jamming during pull in. At the outside of the structure the cable will be protected from all dynamic forces caused by current, waves and changing seabed (13) conditions.

### Alternative arrangements

As an alternative less extensive arrangement the entry protection unit can be fitted with a latch arrangement at the entry unit's bell mouth (5A) to hang off the bend stiffener array at the entry protection unit instead of a hang off point higher up at the monopile structure (1). This solution does not have a bend stiffener protection array inside the monopile and will only have a semi water sealing as seawater will flow through the flooded cable.

## Claims

1. A cable pull-in system for offshore structures (1) of the type having a hollow interior extending from the sea bed to above the surface of the water and an entry hole (2) in the external wall of the structure, **CHARACTERIZED IN THAT** the system comprises an entry hole protection unit (3) comprising a frame (4) equipped with magnets (6) and arranged to be attached to the external wall of the structure by said magnets (1) at the entry hole (2), said entry hole protection unit (3) further comprising an elongated, hollow bend stiffener section (5) arranged to protrude through the entry hole (2) when the frame (4) is attached to the external wall, the system yet further comprising an elongated bend stiffener assembly (7) within the interior of which is arranged an elongated cable member (10), said elongated bend stiffener assembly being equipped with radial sealing members (9) adapted for engaging the interior of the bend stiffener section (5).

2. A cable pull-in system according to claim 1, wherein the elongated bend stiffener assembly (7) is of sufficient length such that a first end may extend through the entry hole (2) and up to the water surface within the interior of the structure (1), and that a second end may extend from the entry hole to some distance along the seabed, and wherein the radial sealing members are located intermediate the first and second ends.

3. A cable pull-in system according to one of the preceding claims, wherein the bend stiffener section (5) and the elongated bend stiffener assembly (7) are fiber reinforced polyurethane structures.

4. A cable pull-in system according to one of the preceding claims, wherein the entry hole protection unit (3) further comprises two floatation members (11) connected to wires, said floatation members being arranged to be released and float to the surface, said wires being adapted for being connected to the elongated bend stiffener assembly (7) such that the elongated bend stiffener assembly (7) may be pulled through the entry hole protection unit (3).

5. A cable pull-in system according to one of the preceding claims wherein the bend stiffener section (5) is equipped with a bell mouth (5A).

6. A cable pull-in system according to one of the preceding claims wherein the entry hole protection unit (3) is adapted to be installed by an ROV.

7. A method for pulling in a cable at an offshore structure of the type having a hollow interior extending from the sea bed to above the surface of the water and an entry hole (2) in the external wall of the structure, **characterized in** the steps of
(a) providing an entry hole protection unit (3) comprising a frame (4) equipped with magnets (6) arranged to be attached to the external wall of the structure (1) at the entry hole (2), a hollow bend stiffener section (5) arranged to protrude throug the entry hole (2) when the frame (4) is attached to the external wall, and two floatation members (11) connected to lengths of wire,
(b) using an ROV to position the bend stiffener section (5) in the entry hole (2) and attach the frame (4) to the external wall of the structure (1) by said magnets,
(c) releasing the two floatation members (11) such that one floatation member rises to the surface inside the structure and one rises to the surface outside the structure,
(d) connecting the wire of the outside floatation member to an elongated bend stiffener assembly, within which is arranged an elongated cable (10),
(e) pulling the bend stiffener assembly (7) /cable (10) through bend stiffener section (5) and up to a hangoff point (8) above the water surface.

8. A method according to claim 7, wherein a section of the bend stiffener assembly (7) is equipped with the radial sealing means, and the bend stiffener assembly (7) is pulled through the bend stiffener section (5) until the radial sealing means engage the interior of the bend stiffener section (5).

9. A method according to claim 7 or 8, wherein the bend stiffener section (5) and the bend stiffener assembly (7) are made of fiber reinforced polyurethane sections.

## Patentansprüche

1. Kabeleinzugssystem für Meereseinrichtungen (1), die ein sich vom Meeresboden bis oberhalb der Wasseroberfläche erstreckendes hohles Inneres und eine Eingangsausnehmung (2) in der Außenwand der Einrichtung aufweisen, **dadurch gekennzeichnet, dass** das System eine Eingangsausnehmungsschutzeinheit (3) aufweist, die einen mit Magneten (6) versehenen Rahmen (4) enthält, und durch die Magnete an der Außenwand der Einrichtung an der Eingangsausnehmung (2) angebracht werden kann, wobei die Eingangsausnehmungsschutzeinheit (3) ferner eine längliche, hohle Biegeversteifungssektion (5) aufweist, die durch die Eingangsausnehmung (2) hervorstehen kann, wenn der Rahmen (4) an der Außenwand angebracht ist, wobei das System außerdem eine längliche Biegeversteigungsanordnung (7) aufweist, in deren Innerem ein längliches Kabelbauteil (10) angeordnet ist, wobei die längliche Biegeversteifungsanordnung mit radialen Dichtungsbauteilen (9) versehen ist, die am Inneren der Biegeversteifungssektion (5) angreifen können.

2. Kabeleinzugssystem gemäß Anspruch 1, bei dem die längliche Biegeversteifungsanordnung (7) eine derart ausreichende Länge aufweist, dass sich ein erstes Ende durch die Eingangsausnehmung (2) erstrecken kann und innerhalb des Inneren der Einrichtung (1) hoch zur Wasseroberfläche, und dass sich ein zweites Ende von der Eingangsausnehmung zu einigem Abstand entlang des Meeresbodens erstrecken kann, und wobei die radialen Dichtungsbauteile zwischen dem ersten und zweiten Ende gelegen sind.

3. Kabeleinzugssystem gemäß einem der vorangegangen Ansprüche, bei dem die Biegeversteigungssektion (5) und die längliche Biegeversteifungsanordnung (7) faserverstärkte Polyurethaneinrichtungen sind.

4. Kabeleinzugssystem gemäß einem vorangegangen Ansprüche, bei dem die Eingangsausnehmungsschutzeinheit (3) ferner zwei Schwimmbauteile (11) aufweist, die mit Drähten verbunden sind, wobei die schwimmenden Bauteile freigeben werden können und zur Oberfläche schwimmen können, wobei die Drähte zum derartigen Verbinden mit der länglichen Biegeversteifungsanordnung (7) eingerichtet sind, das die länglichen Biegeversteifungsanordnung (7) durch die Eingangsausnehmungsschutzeinheit (3) gezogen werden kann.

5. Kabeleinzugssystem gemäß einem der vorangegangen Ansprüche, bei dem die Biegeversteifungssektion (5) mit einer Trichteröffnung (5A) versehen ist.

6. Kabeleinzugssystem gemäß einem der vorangegangen Ansprüche, bei dem die Eingangsausnehmungsschutzeinheit (3) durch einen ROV installiert werden kann.

7. Verfahren zum Einziehen eines Kabels an einer Meereseinrichtung, die ein das sich vom Meeresboden bis oberhalb der Wasseroberfläche erstreckendes hohles Inneres und eine Eingangsausnehmung (2) in der Außenwand der Einrichtung aufweist, **gekennzeichnet durch** die Schritte:
a) Bereitstellen einer Eingangsausnehmungsschutzeinheit (3), die einen Rahmen (4), der mit Magneten versehen sind, die an der Außenwand der Einrichtung (1) an der Eingangsausnehmung (2) angebracht werden können, eine hohle Biegeversteifungssektion (5), die **durch** die Eingangsausnehmung (2) hervorstehen kann, wenn der Rahmen (4) an der Außenwand angebracht ist, und zwei Schwimmbauteile (11) aufweist, die mit Drahtlängen verbunden sind,
b) Verwenden eines ROV, um die Biegeversteifungssektion (5) in der Eingangsausnehmung (2) zu positionieren und den Rahmen (4) an der Außenwand der Einrichtung (1) durch die Magnete anzubringen,
c) Freigeben der zwei Schwimmbauteile (11), so dass ein Schwimmbauteil innerhalb der Einrichtung zur Oberfläche aufsteigt und eines außerhalb der Einrichtung zur Oberfläche aufsteigt,
d) Verbinden des Drahts des äußeren Schwimmbauteils mit einer länglichen Biegeversteifungsanordnung, innerhalb der ein längliches Kabel (10) angeordnet ist,
e) Ziehen der Biegeversteifungsanordnung (7)/ des Kabels (10) **durch** die Biegeversteifungssektion (5) und hoch zu einer Aushängeposition (8) oberhalb der Wasseroberfläche.

8. Verfahren gemäß Anspruch 7, bei dem eine Sektion der Biegeversteifungsanordnung (7) mit einem radialen Dichtungsmittel ausgestattet ist, und die Biegeversteifungsanordnung (7) durch die Biegeversteifungssektion (5) gezogen wird, bis das radiale Dichtungsmittel am Inneren der Biegeversteifungssektion (5) angreift.

9. Verfahren gemäß Anspruch 7 oder 8, bei dem die Biegeversteifungssektion (5) und die Biegeversteifungsanordnung (7) aus faserverstärkten Polyurethansektionen hergestellt sind.

## Revendications

1. Système de tirage de câble pour des structures en mer (1) du type ayant un intérieur creux s'étendant du fond marin à au-dessus de la surface de l'eau et un trou d'entrée (2) dans la paroi externe de la structure, **caractérisé en ce que** le système comprend une unité de protection de trou d'entrée (3) comprenant un cadre (4) équipé d'aimants (6) et agencé pour être fixé à la paroi externe de la structure par lesdits aimants (1) au niveau du trou d'entrée (2), ladite unité de protection de trou d'entrée (3) comprenant en outre un profilé raidisseur courbe creux allongé (5) agencé pour faire saillie à travers le trou d'entrée (2) quand le cadre (4) est fixé à la paroi externe, le système comprenant encore en outre un ensemble raidisseur courbe allongé (7) à l'intérieur duquel est agencé un élément de câble allongé (10), ledit ensemble raidisseur courbe allongé étant équipé d'éléments d'étanchéité radiaux (9) adaptés pour mettre en prise l'intérieur du profilé raidisseur courbe (5).

2. Système de tirage de câble selon la revendication 1, dans lequel l'ensemble raidisseur courbe allongé (7) est de longueur suffisante pour qu'une première extrémité puisse s'étendre à travers le trou d'entrée (2) et jusqu'à la surface de l'eau à l'intérieur de la structure (1), et qu'une deuxième extrémité puisse s'étendre à partir du trou d'entrée jusqu'à une certaine distance sur le fond marin, et dans lequel les éléments d'étanchéité radiaux sont situés entre les première et deuxième extrémités.

3. Système de tirage de câble selon l'une des revendications précédentes, dans lequel le profilé raidisseur courbe (5) et l'ensemble raidisseur courbe allongé (7) sont des structures en polyuréthane renforcé par des fibres.

4. Système de tirage de câble selon l'une des revendications précédentes, dans lequel l'unité de protection de trou d'entrée (3) comprend en outre deux éléments de flottaison (11) connectés à des câbles, lesdits éléments de flottaison étant agencés pour être libérés et flotter à la surface, lesdits câbles étant adaptés pour être connectés à l'ensemble raidisseur courbe allongé (7) de manière que l'ensemble raidisseur courbe allongé (7) puisse être tiré à travers l'unité de protection de trou d'entrée (3).

5. Système de tirage de câble selon l'une des revendications précédentes, dans lequel le profilé raidisseur courbe (5) est équipé d'une ouverture évasée (5A).

6. Système de tirage de câble selon l'une des revendications précédentes, dans lequel l'unité de protection de trou d'entrée (3) est adaptée pour être installée par un véhicule télécommandé.

7. Méthode pour tirer un câble au niveau d'une structure en mer du type ayant un intérieur creux s'étendant du fond marin à au-dessus de la surface de l'eau et un trou d'entrée (2) dans la paroi externe de la structure, **caractérisée par** les étapes de
(a) fourniture d'une unité de protection de trou d'entrée (3) comprenant un cadre (4) équipé d'aimants (6) agencés pour être fixés à la paroi externe de la structure (1) au niveau du trou d'entrée (2), un profilé raidisseur courbe creux (5) agencé pour faire saillie à travers le trou d'entrée (2) quand le cadre (4) est fixé à la paroi externe, et deux éléments de flottaison (11) connectés à des tronçons de câble,
(b) utilisation d'un véhicule télécommandé pour positionner le profilé raidisseur courbe (5) dans le trou d'entrée (2) et fixer le cadre (4) à la paroi externe de la structure (1) par lesdits aimants,
(c) libération des deux éléments de flottaison (11) de manière qu'un élément de flottaison monte à la surface à l'intérieur de la structure et un monte à la surface à l'extérieur de la structure,
(d) connexion du câble de l'élément de flottaison extérieur à un ensemble raidisseur courbe allongé, à l'intérieur duquel est agencé un câble allongé (10),
(e) tirage de l'ensemble raidisseur courbe (7)/du câble (10) à travers le profilé raidisseur courbe (5) et jusqu'à un point d'accrochage (8) au-dessus de la surface de l'eau.

8. Méthode selon la revendication 7, dans laquelle une section de l'ensemble raidisseur courbe (7) est équipée de moyens d'étanchéité radiaux et l'ensemble raidisseur courbe (7) est tiré à travers le profilé raidisseur courbe (5) jusqu'à ce que les moyens d'étanchéité radiaux mettent en prise l'intérieur du profilé raidisseur courbe (5).

9. Méthode selon la revendication 7 ou 8, dans laquelle le profilé raidisseur courbe (5) et l'ensemble raidisseur courbe (7) sont constitués de profilés en polyuréthane renforcé par des fibres.
